# EUROPEAN PATENT SPECIFICATION

(11) **EP 3 454 972 B1**
(45) Date of publication and mention of the grant of the patent: **31.03.2021**
(21) Application number: 17739352.7
(22) Date of filing: 01.05.2017
(51) Int. Cl.: B01D 53/02, B01D 53/047, B01J 20/26, B01J 20/28

(54) **POROUS POLYMERIC SORBENT FOR CARBON DIOXIDE**
PORÖSES POLYMERES SORPTIONSMITTEL FÜR KOHLENDIOXID
SORBANT POLYMÈRE POREUX POUR DIOXYDE DE CARBONE

(30) Priority: 12.05.2016 US 201662335207 P
(43) Date of publication of application: 20.03.2019
(73) Proprietor: 3M Innovative Properties Company, St. Paul, MN 55133-3427 (US)
(72) Inventor: WENDLAND, Michael S., Saint Paul Minnesota 55133-3427 (US)
(74) Representative: Mathys & Squire
(86) International application number: PCT/US2017/030397
(87) International publication number: WO 2017/196570

(56) References cited:
- WO-A1-2016/018437
- CN-A- 105 061 657
- US-A- 3 659 400
- US-A- 5 248 321
- US-A1- 2012 164 045
- PETERSSON U ET AL: "Stability and purity of low-polarity adsorbents for coupled supercritical fluid extraction-supercritical fluid chromatography-flame ionization detection", JOURNAL OF CHROMATOGRAPHY A, ELSEVIER, AMSTERDAM, NL, vol. 734, no. 2, 24 May 1996 (1996-05-24), pages 311-318, XP004039121, ISSN: 0021-9673, DOI: 10.1016/0021-9673(95)01272-9

## Description

### Cross Reference To Related Application

This application claims the benefit of U.S. Provisional Patent Application No. 62/335207, filed May 12, 2016, the disclosure of which is incorporated by reference herein in its entirety.

### Technical Field

A method of sorbing carbon dioxide on a porous polymeric sorbent and a polymeric sorbent having carbon dioxide sorbed thereon are provided.

### Background

The production of energy from coal and natural gas requires technologies to remove carbon dioxide (CO₂), which is a gaseous impurity in both processes. The low cost and global abundance of both coal and natural gas all but ensures the continued use of these two natural resources for energy generation for many years to come. Efforts to develop technologies to improve the removal of unwanted CO₂ through the development of selective, high capacity sorbents for CO₂ are needed.

To generate energy from coal, integrated gasification combined cycle (IGCC) power plants make use of the water-gas shift reaction. Coal is burned and the carbon monoxide produced is then reacted with water in a reactor containing a catalyst to perform the water-gas shift reaction. This reaction converts water and carbon monoxide to carbon dioxide and hydrogen. The CO₂/H₂ gas stream produced (called synthetic gas or syngas) typically contains about 35-40 mole percent CO₂. An important step in electricity generation at IGCC power plants is the removal of the carbon dioxide generated by the water-gas shift reaction to produce fuel grade or even higher purity hydrogen. The hydrogen is subsequently used to power a combined cycle turbine that produces electricity.

The most widely used method to remove the CO₂ from H₂ is a pressure swing adsorption cycle with the sorbent being a physical solvent. In a pressure swing adsorption cycle, a CO₂/H₂ gas stream at high pressure (e.g., 20-45 bar) is passed through the physical solvent resulting in a purified H₂ stream exiting the sorbent vessel. The adsorption portion of the cycle is stopped prior to breakthrough of a targeted level of CO₂. A desorption step is then performed to regenerate the physical solvent.

Physical solvents separate CO₂ from other gases based on a difference in solubility. Because there are only weak interactions between the CO₂ and the physical solvent, the CO₂ can be easily removed from the physical solvent by reducing the pressure. While there are several different physical solvents in use today, polyethylene glycol dimethyl ether (available under the trade designation SELEXOL) is the most commonly used. While the adsorption selectivity for CO₂ is high, the solubility of CO₂ in SELEXOL at 20 bar and 25°C is only about 9.6 weight percent. Although the solubility amount can vary depending on the temperature and pressure used in the process, the ability to capture a higher percentage of CO₂ per mass of sorbent while maintaining selectivity over other gases such as hydrogen would be highly advantageous.

Natural gas production requires an extensive set of processes to purify the natural gas to a useable fuel. Typical impurities include acid gases (such as hydrogen sulfide and sulfur dioxide), water, and carbon dioxide. Carbon dioxide is typically present in natural gas at a level close to 5 volume percent. While the most common method to remove CO₂ from methane is a pressure swing adsorption cycle, the low partial pressure of the CO₂ in the mixture makes the removal of CO₂ with physical solvents impractical. A stronger interaction between the CO₂ and solvent is required. As such, chemical solvents are typically used. The most widely used chemical solvent is an aqueous solution of ethanol amine. In a single pressure swing adsorption cycle, ethanol amine can separate/capture about 5 percent of its mass in CO₂. While the strong interaction of the CO₂ with the chemical solvent allows for the efficient removal of the CO₂ from the gas stream, regeneration of the chemical solvent requires heating. This heating step tends to render the overall process energetically expensive.

Some polymeric sorbents have been prepared for capturing CO₂. Examples include hyper-crosslinked polymers such as those described by Martin et al. in J. Mater. Chem., 2011, 21, 5475 and by Woodward et al. in J. Am. Chem. Soc., 2014, 136, 9028-9035. Another example is US 2012/164045 A1. To prepare the hyper-crosslinked polymers, a large amount of FeCl₃ (e.g., often the number of moles of FeCl₃ used are at least equal to the number of moles of crosslinker) is necessary for the reaction. Halogenated solvents are typically used to prepare the polymeric material. Once prepared, the FeCl₃ used in the reaction often needs to be removed by extraction. Polymeric sorbents that are easier to manufacture are needed.

### Summary

A method of sorbing carbon dioxide on a divinylbenzene-based porous polymeric sorbent is provided. Additionally, a composition is provided that contains the porous polymeric sorbent and carbon dioxide sorbed on the porous polymeric sorbent. The porous polymeric sorbent typically has micropores, mesopores, or a combination thereof and can selectively remove carbon dioxide from other gases such as methane or hydrogen.

The invention is a method of sorbing carbon dioxide from a gaseous composition to selectively remove carbon dioxide from methane or hydrogen gas.

The method includes providing a porous polymeric sorbent, wherein the porous polymeric sorbent has a BET specific surface area equal to at least 400 m²/gram. The porous polymeric sorbent contains a) 75 to 100 weight percent of a first monomeric unit of Formula (I) 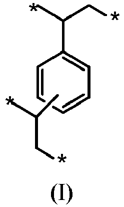 and b) 0 to 25 weight percent of a second monomeric unit of Formula (II).

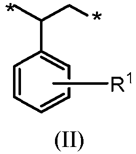

In Formula (II), R¹ is hydrogen or alkyl. Each weight percent value is based on a total weight of the porous polymeric sorbent. Each asterisk (*) (here and throughout) denotes the location of attachment of the monomeric unit to another monomeric unit or to a terminal group. The method further includes exposing the porous polymeric sorbent to the gaseous composition at a first pressure and sorbing carbon dioxide on the porous polymeric sorbent. The method still further includes regenerating the polymeric sorbent by desorbing carbon dioxide at a second pressure that is lower than the first pressure.

In a second aspect (not claimed), a composition is provided that includes a) the porous polymeric sorbent described above and b) carbon dioxide sorbed on the porous polymeric sorbent, wherein at least 1 mmole (millimole) of carbon dioxide sorbs per gram of the porous polymeric sorbent at 25°C and 5 bar.

### Brief Description of the Drawings

FIG. 1 is a plot of the adsorption and desorption isotherms at 25°C and at pressures up to about 20 bar for both carbon dioxide and methane on an exemplary porous polymeric sorbent (Example 1).
FIG. 2 is a plot of a series of carbon dioxide adsorption and desorption isotherms at pressures up to about 20 bar performed at different temperatures on a single sample of an exemplary porous polymeric sorbent (Example 1).
FIG. 3 is a plot of the argon adsorption isotherm at 77°K and at a relative pressure up to 0.98 ± 0.01 for an exemplary porous polymeric sorbent (Example 1).

### Detailed Description

Methods of sorbing carbon dioxide on divinylbenzene-based porous polymeric sorbents and compositions containing carbon dioxide sorbed on the porous polymeric sorbents are provided. The porous polymeric sorbents typically have micropores, mesopores, or a combination thereof and can selectively remove carbon dioxide from other gases, namely methane or hydrogen.

The terms "a", "an", and "the" are used interchangeably with "at least one" to mean one or more of the elements being described.

The term "and/or" means either or both. For example "A and/or B" means only A, only B, or both A and B.

The terms "polymer" and "polymeric material" are used interchangeably and refer to materials formed by reacting one or more monomers. The terms include homopolymers, copolymers, terpolymers, or the like. Likewise, the terms "polymerize" and "polymerizing" refer to the process of making a polymeric material that can be a homopolymer, copolymer, terpolymer, or the like.

The terms "polymeric sorbent" and "porous polymeric sorbent" are used interchangeably to refer to a polymeric material that is porous and that can sorb gaseous substances such as, for example, carbon dioxide. Porous materials such as the polymeric sorbents can be characterized based on the size of their pores. The term "micropores" refers to pores having a diameter less than 2 nanometers. The term "mesopores" refers to pores having a diameter in a range of 2 to 50 nanometers. The term "macropores" refers to pores having a diameter greater than 50 nanometers. The porosity of a polymeric sorbent can be characterized from an adsorption isotherm of an inert gas such as nitrogen or argon by the porous material under cryogenic conditions (i.e., liquid nitrogen at 77°K). The adsorption isotherm is typically obtained by measuring adsorption of the inert gas such as argon by the porous polymeric sorbent at multiple relative pressures in a range of about 10⁻⁶ to about 0.98 + 0.01. The isotherms are then analyzed using various methods such as the BET method (Brunauer-Emmett-Teller method) to calculate specific surface areas and density functional theory (DFT) to characterize the porosity and the pore size distribution.

The term "sorbing" and similar words such as "sorbs" and "sorbed" refer to the addition of a first substance (e.g., a gas such as carbon dioxide, hydrogen, or methane) to a second substance (e.g., a polymeric material such as the porous polymeric sorbent) by adsorbing, absorbing, or both. Likewise, the term "sorbent" refers to a second substance that sorbs a first substance by adsorbing, absorbing, or both.

The term "surface area" refers to the total area of a surface of a material including the internal surfaces of accessible pores. The surface area is typically calculated from adsorption isotherms obtained by measuring the amount of an inert gas such as nitrogen or argon that adsorbs on the surface of a material under cryogenic conditions (i.e., liquid nitrogen 77°K) over a range of relative pressures. The term "BET specific surface area" is the surface area per gram of a material that is typically calculated from adsorption isotherm data of the inert gas over a relative pressure range of 0.05 to 0.3 using the BET method.

The term "monomer composition" refers to that portion of a polymerizable composition that includes at least one monomer. More specifically, the monomer composition includes at least divinylbenzene and often includes divinylbenzene and an optional styrene-type monomer. The term "polymerizable composition" includes all materials included in the reaction mixture used to form the polymeric material. The polymerizable composition includes, for example, the monomer composition, the organic solvent, the initiator, and other optional components. Some of the components in the polymerizable composition such as the organic solvent may not undergo a chemical reaction but can influence the chemical reaction and the resulting polymeric material.

The term "styrene-type monomer" refers to styrene, an alkyl substituted styrene (e.g., ethyl styrene), or mixtures thereof. These monomers are often present in divinylbenzene as impurities.

The term "room temperature" refers to a temperature in a range of 20°C to 30°C, in a range of 20°C to 25°C, in a range close to 25°C, or equal to 25°C.

A method of sorbing carbon dioxide is provided. The carbon dioxide is sorbed on a porous polymeric sorbent that includes a) 75 to 100 weight percent of a first monomeric unit of Formula (I) 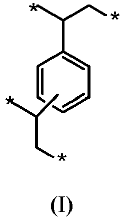 and b) 0 to 25 weight percent of a second monomeric unit of Formula (II). 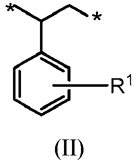 In Formula (II), R¹ is hydrogen or alkyl (e.g., an alkyl having 1 to 10 carbon atoms, 1 to 6 carbon atoms, 1 to 4 carbon atoms, or 2 to 4 carbon atoms). The method further includes exposing the porous polymeric sorbent to the gaseous composition at a first pressure and sorbing carbon dioxide on the porous polymeric sorbent. The method still further includes regenerating the polymeric sorbent by desorbing carbon dioxide at a second pressure that is lower than the first pressure. Each weight percent value is based on a total weight of the porous polymeric sorbent. Each asterisk (*) (here and throughout) denotes the location of attachment of the monomeric unit to another monomeric unit or to a terminal group. The method further includes exposing the porous polymeric sorbent to a gaseous composition containing carbon dioxide and sorbing carbon dioxide on the porous polymeric sorbent.

The method can further include exposing the porous polymeric sorbent repeatedly to a gas composition at a first pressure and regenerating the porous polymeric sorbent at a second pressure that is lower than the first pressure. In some methods, the second pressure is greater than or equal to 1 bar but can be lower if the use of vacuum equipment is acceptable.

Stated differently, the porous polymeric sorbent is a divinylbenzene-based polymeric material that is synthesized from a monomer composition of divinylbenzene and an optional styrene-type monomer. Divinylbenzene results in a monomeric unit of Formula (I) and styrene-type monomers result in monomeric units of Formula (II) in the porous polymeric sorbent. More specifically, the monomer composition includes 1) 75 to 100 weight percent divinylbenzene, and 2) 0 to 25 weight percent of the optional styrene-type monomer, wherein the styrene-type monomer is styrene, an alkyl substituted styrene, or a combination thereof. The amounts are based on the total weight of monomers in the monomer composition. The amount of each monomer in the monomer composition is selected to provide a porous polymeric material (porous polymeric sorbent). That is, the amounts of each monomer are selected to provide a polymeric sorbent having a BET specific surface area that is at least 400 m²/gram.

The amount of divinylbenzene crosslinker can have a strong influence on the BET specific surface area of the polymeric sorbent. The divinylbenzene contributes to the high crosslink density and to the formation of a rigid polymeric material having micropores and/or mesopores. The BET specific surface area tends to increase with an increase in the amount of divinylbenzene in the monomer composition. If the amount of divinylbenzene in the monomer composition is less than 75 weight percent, the polymeric material may not have a sufficiently high BET specific surface area.

In some embodiments, the amount of divinylbenzene is at least 75 weight percent, at least 80 weight percent, at least 85 weight percent, or at least 90 weight percent. The amount of divinylbenzene can be up to 100 weight percent, up to 95 weight percent, or up to 90 weight percent. For example, the divinylbenzene can be in a range of 75 to 100 weight percent, 80 to 100 weight percent, 85 to 100 weight percent, 90 to 100 weight percent, 75 to 95 weight percent, 75 to 90 weight percent, 75 to 85 weight percent, 80 to 95 weight percent, 80 to 90 weight percent, or 85 to 95 weight percent. The amounts are based on the total weight of monomers in the monomer composition.

Divinylbenzene can be difficult to obtain in a pure form. For example, divinylbenzene is often commercially available with purity as low as 55 weight percent. Obtaining divinylbenzene with purity greater than about 80 weight percent can be difficult and/or expensive. The impurities accompanying divinylbenzene are typically styrene-type monomers such as styrene, alkyl substituted styrene (e.g., ethyl styrene), or mixtures thereof. Thus, styrene-type monomers are often present in the monomer composition along with divinylbenzene. The monomer composition typically contains 0 to 25 weight percent styrene-type monomers based on a total weight of monomers in the monomer composition. If the content of the styrene-type monomer is greater than 25 weight percent, the crosslink density may be too low and/or the distance between crosslinks may be too low to provide a polymeric sorbent with the desired high BET specific surface area (e.g., at least 400 m²/gram). As the crosslink density decreases, the resulting polymeric sorbent tends to be less rigid and less porous.

Typically, divinylbenzene having a purity of 55 weight percent is not suitable for use in the monomer compositions because the content of styrene-type monomer impurities is too high. That is, to provide a monomer composition having a minimum amount of 75 weight percent divinylbenzene, the divinylbenzene often is at least about 75 weight percent or at least 80 weight percent pure. Using divinylbenzene having a lower purity than about 75 weight percent or at least 80 weight percent can result in the formation of a polymeric material with an undesirably low BET specific surface area.

In some embodiments, the amount of optional styrene-type monomers is at least 1 weight percent, at least 2 weight percent, at least 5 weight percent, or at least 10 weight percent. The amount of styrene-type monomer can be up to 25 weight percent, up to 20 weight percent, up to 15 weight percent, or up to 10 weight percent. For example, the amount of styrene-type monomer in the monomer composition can be in a range of 0 to 25 weight percent, 1 to 25 weight percent, 5 to 25 weight percent, 10 to 25 weight percent, 0 to 20 weight percent, 1 to 20 weight percent, 5 to 20 weight percent, 10 to 20 weight percent, 0 to 15 weight percent, 1 to 15 weight percent, 5 to 15 weight percent, or 10 to 15 weight percent. The amounts are based on the total weight of monomers in the monomer composition.

Overall, the monomer composition typically includes 75 to 100 weight percent divinylbenzene based on the total weight of monomers in the monomer composition and 0 to 25 weight percent styrene-type monomer based on the total weight of monomers in the monomer composition. In other embodiments, the monomer composition includes 75 to 95 weight percent divinylbenzene based on the total weight of monomers in the monomer composition, and 5 to 25 weight percent styrene-type monomer based on the total weight of monomers in the monomer composition. In further embodiments, the monomer composition contains 75 to 90 weight percent divinylbenzene, and 10 to 25 weight percent styrene-type monomer. In still other embodiments, the monomer composition contains 75 to 85 weight percent divinylbenzene, and 15 to 25 weight percent styrene-type monomer. In yet other embodiments, the monomer composition contains 80 to 100 weight percent divinylbenzene and 0 to 20 weight percent styrene-type monomer or 80 to 95 weight percent divinylbenzene and 5 to 20 weight percent styrene-type monomer. In still further embodiments, the monomer composition contains 80 to 90 weight percent divinylbenzene and 10 to 20 weight percent styrene-type monomer.

Stated differently, the polymeric sorbent includes 75 to 100 weight percent monomeric units of Formula (I) and 0 to 25 weight percent monomeric units of Formula (II). In other embodiments, the polymeric sorbent includes 75 to 95 weight percent monomeric units of Formula (I) and 5 to 25 weight percent monomeric units of Formula (II). In still other embodiments, the polymeric sorbent contains 75 to 90 weight percent monomeric units of Formula (I) and 10 to 25 weight percent monomeric units of Formula (II). In yet other embodiments, the polymeric sorbent contains 75 to 85 weight percent monomeric units of Formula (I) and 15 to 25 weight percent monomeric units of Formula (II). In still further embodiments, the polymeric sorbent contains 80 to 100 weight percent monomeric units of Formula (I) and 0 to 20 weight percent monomeric units of Formula (II) or 80 to 95 weight percent monomeric units of Formula (I) and 5 to 20 weight percent monomeric units of Formula (II). In yet further embodiments, the polymeric sorbent contains 80 to 90 weight percent monomeric units of Formula (I) and 10 to 20 weight percent monomeric units of Formula (II).

The monomer composition typically contains at least 95 weight percent monomers selected from divinylbenzene and styrene-type monomer. For example, at least 97 weight percent, at least 98 weight percent, at least 99 weight percent, at least 99.5 weight percent, at least 99.9 weight percent, or 100 weight percent of the monomers in the monomer composition are selected from divinylbenzene and styrene-type monomer. In many embodiments, the only monomer purposefully added to the monomer composition is divinylbenzene with any other monomers being present (including the styrene-type monomers) as impurities in the divinylbenzene. In some embodiments, where high purity divinylbenzene is used, the monomer composition contains only divinylbenzene.

Stated differently, at least 95 weight percent of the monomeric units included in the polymeric sorbent are selected from Formula (I) and Formula (II). For example, at least 97 weight percent, at least 98 weight percent, at least 99 weight percent, at least 99.5 weight percent, at least 99.9 weight percent, or 100 weight percent of the monomeric units in the polymeric sorbent are of Formula (I) and Formula (II). In some embodiments, where high purity divinylbenzene is used to form the polymeric sorbent, the only monomeric units are of Formula (I).

In addition to the monomer composition, the polymerizable composition used to form the porous polymeric sorbent includes an organic solvent. The polymerizable composition is a single phase prior to polymerization (i.e., prior to polymerization, the polymerizable composition is not a suspension). The organic solvent is selected to to be miscible with the monomers included in the monomer composition and to solubilize the polymeric material (polymeric sorbent) as it begins to form. Suitable organic solvents are typically an alkane, haloalkane, aromatic compound, ether, ketone, ester, amide, or mixture thereof.

The organic solvent can function as a porogen during formation of the porous polymeric sorbent. The organic solvent choice can strongly influence the BET specific surface area and the size of the pores formed in the polymeric sorbent. Using organic solvents that are miscible with both the monomers and the forming polymer tend to result in the formation of polymeric material having micropores and mesopores. Good solvents for the monomers and the forming polymer tend to result in a larger fraction of the porosity of the final polymeric sorbent being in the form of micropores and mesopores.

Organic solvents that are particularly suitable include alkanes, haloalkanes, aromatic compounds (e.g., benzene and benzene substituted with one or more alkyl groups), ethers, ketones, esters, amides, or mixture thereof. Other organic solvents can be added along with one or more of these organic solvents provided that the resulting polymeric sorbent has a BET specific surface area equal to at least 400 m²/gram. Examples of suitable alkanes include, but are not limited to, *n*-heptane and cyclohexane. An example haloalkane includes, but is not limited to, 1-chlorodecane. Examples of suitable aromatics benzene and benzene substituted with one or more alkyl groups (e.g., toluene, xylenes, and mesitylene). Examples of suitable ethers include, but are not limited to, tetrahydrofuran and tetrahydropyran. Examples of suitable ketones include, but are not limited to, alkyl ketones such as acetone, methyl ethyl ketone and methyl isobutyl ketone. Examples of suitable esters include, but are not limited to, alkyl acetate esters (e.g., ethyl acetate, propyl acetate, butyl acetate, amyl acetate, and *tert-butyl* acetate) and phthalate esters (e.g., dibutyl phthalate). Examples of suitable amides include, but are not limited to, *N,N*-dimethylformamide, *N,N*-dimethylacetamide and *N*-methyl-2-pyrrolidone.

The organic solvent can be used in any desired amount. The polymerizable compositions often have percent solids in a range of 1 to 75 weight percent (e.g., the polymerizable composition contains 25 to 99 weight percent organic solvent). If the percent solids are too low, the polymerization time may become undesirably long. The percent solids are often at least 1 weight percent, at least 2 weight percent, at least 5 weight percent, at least 10 weight percent, or at least 15 weight percent. If the percent solids are too great, however, the viscosity may be too high for effective mixing. Further, increasing the percent solids tends to result in the formation of polymeric sorbent with a lower BET specific surface area. The percent solids can be up to 75 weight percent, up to 70 weight percent, up to 60 weight percent, up to 50 weight percent, up to 40 weight percent, up to 30 weight percent, or up to 25 weight percent. For example, the percent solids can be in a range of 5 to 75 weight percent, 5 to 50 weight percent, 5 to 40 weight percent, 5 to 30 weight percent, or 5 to 25 weight percent.

In addition to the monomer composition and organic solvent, the polymerizable compositions typically include an initiator for free radical polymerization reactions. Any suitable free radical initiator can be used. Suitable free radical initiators are typically selected to be miscible with the monomers included in the polymerizable composition. In some embodiments, the free radical initiator is a thermal initiator that can be activated at a temperature above room temperature. In other embodiments, the free radical initiator is a redox initiator. Because the polymerization reaction is a free radical reaction, it is desirable to minimize the amount of oxygen in the polymerizable composition.

Both the type and amount of initiator can affect the polymerization rate. In general, increasing the amount of the initiator tends to lower the BET specific surface area; however, if the amount of initiator is too low, it may be difficult to obtain high conversions of the monomers to polymeric material. The free radical initiator is typically present in an amount in a range of 0.05 to 10 weight percent, 0.05 to 8 weight percent, 0.05 to 5 weight percent, 0.1 to 10 weight percent, 0.1 to 8 weight percent, 0.1 to 5 weight percent, 0.5 to 10 weight percent, 0.5 to 8 weight percent, 0.5 to 5 weight percent, 1 to 10 weight percent, 1 to 8 weight percent, or 1 to 5 weight percent. The weight percent is based on a total weight of monomers in the polymerizable composition.

Suitable thermal initiators include organic peroxides and azo compounds. Example azo compounds include, but are not limited to, those commercially available under the trade designation VAZO from E.I. du Pont de Nemours & Co. (Wilmington, DE) such as VAZO 64 (2,2'-azobis(isobutyronitrile), which is often referred to as AIBN), and VAZO 52 (2,2'-azobis(2,4-dimethylpentanenitrile)). Other azo compounds are commercially available from Wako Chemicals USA, Inc. (Richmond, VA) such as V-601 (dimethyl 2,2'-azobis(2-methylproprionate)), V-65 (2,2'-azobis(2,4-dimethyl valeronitrile)), and V-59 (2,2'-azobis(2-methylbutyronitrile)). Organic peroxides include, but are not limited to, bis(1-oxoaryl)peroxides such as benzoyl peroxide (BPO), bis(1-oxoalkyl)peroxides such as lauroyl peroxide, and dialkyl peroxides such as dicumyl peroxide or di-*tert*-butyl peroxide and mixtures thereof. The temperature needed to activate the thermal initiator is often in a range of 25°C to 160°C, in a range of 30°C to 150°C, in a range of 40°C to 150°C, in a range of 50°C to 150°C, in a range of 50°C to 120°C, or in a range of 50°C to 110°C.

Suitable redox initiators include arylsulfinate salts, triarylsulfonium salts, or *N*,*N-*dialkylaniline (e.g., *N,N*-dimethylaniline) in combination with a metal in an oxidized state, a peroxide, or a persulfate. Specific arylsulfinate salts include tetraalkylammonium arylsulfinates such as tetrabutylammonium 4-ethoxycarbonylbenzenesulfinate, tetrabutylammonium 4-trifluoromethylbenzenesulfinate, and tetrabutylammonium 3-trifluoromethylbenzenesulfinate. Specific triarylsulfonium salts include those with a triphenylsulfonium cation and with an anion selected from PF₆⁻, AsF₆⁻, and SbF₆⁻. Suitable metal ions include, for example, ions of group III metals, transition metals, and lanthanide metals. Specific metal ions include, but are not limited to, Fe(III), Co(III), Ag(I), Ag(II), Cu(II), Ce(III), Al (III), Mo(VI), and Zn(II). Suitable peroxides include benzoyl peroxide, lauroyl peroxide, and the like. Suitable persulfates include, for example, ammonium persulfate, tetraalkylammonium persulfate (e.g., tetrabutylammonium persulfate), and the like.

The polymerizable composition is typically free or substantially free of surfactants. As used herein, the term "substantially free" in reference to the surfactant means that no surfactant is purposefully added to the polymerizable composition and any surfactant that may be present is the result of being an impurity in one of the components of the polymerizable composition (e.g., an impurity in the organic solvent or in one of the monomers). The polymerizable composition typically contains less than 0.5 weight percent, less than 0.3 weight percent, less than 0.2 weight percent, less than 0.1 weight percent, less than 0.05 weight percent, or less than 0.01 weight percent surfactant based on the total weight of the polymerizable composition. The absence of a surfactant is advantageous because these materials tend to restrict access to and, in some cases, fill micropores and mesopores in a porous material.

When the polymerizable composition is heated in the presence of a free radical initiator, polymerization of the monomers in the monomer composition occurs. By balancing the amounts of each monomer in the monomer composition and by selecting an organic solvent that can solubilize all of the monomers and the growing polymeric material during its early formation stage, a polymeric sorbent can be prepared that has a BET specific surface area equal to at least 400 m²/gram. The BET specific surface area of the polymeric sorbent can be at least 500 m²/gram, at least 600 m²/gram, or at least 800 m²/gram. The BET specific surface area can be, for example, up to 1500 m²/gram or higher, up to 1400 m²/gram, up to 1200 m²/gram, or up to 1000 m²/gram.

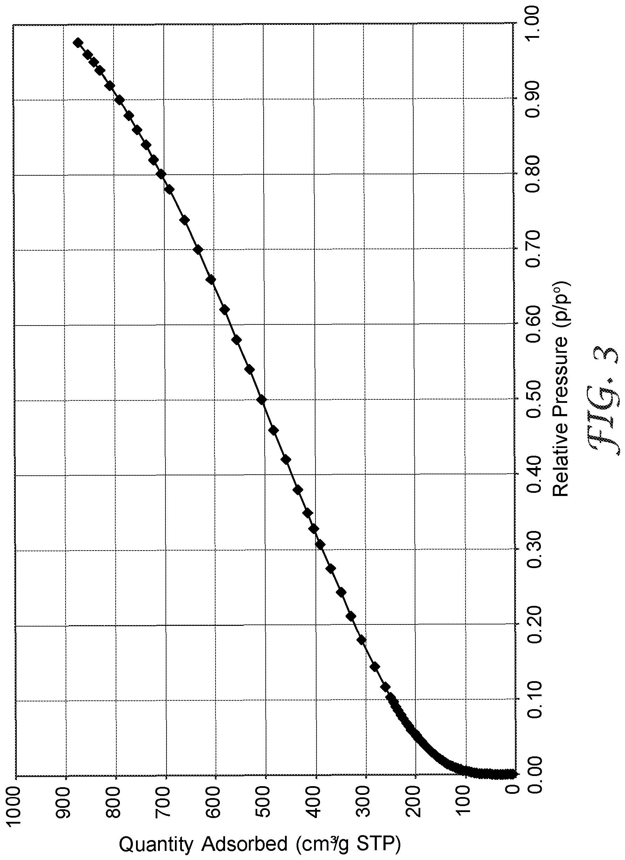

The high BET specific surface area is at least partially attributable to the presence of micropores and/or mesopores in the polymeric sorbent. The argon adsorption isotherms (at 77°K) of the polymeric sorbent indicate that there is considerable adsorption of argon at relative pressures below 0.1, which suggests that micropores are present. There is a gradual increase in adsorption at relative pressures between 0.1 and about 0.95. This increase is indicative of a wide size distribution of mesopores. An argon adsorption isotherm is shown in FIG. 3 for an example porous polymeric sorbent (Example 1).

In some embodiments, at least 20 percent of the BET specific surface area of the polymeric sorbent is attributable to the presence of micropores and/or mesopores. The percentage of the BET specific surface area attributable to the presence of micropores and/or mesopores can be at least 25 percent, at least 30 percent, at least 40 percent, at least 50 percent, or at least 60 percent. In some embodiments, the percentage of the BET specific surface area attributable to the presence of micropores and/or mesopores can be up to 90 percent or higher, up to 80 percent or higher, or up to 75 percent or higher.

The porous polymeric sorbent has a total pore volume equal to at least 0.3 cm³/gram. Total pore volume is calculated from the amount of argon adsorbed at liquid nitrogen temperature (77°K) at a relative pressure (p/p°) equal to approximately 0.98 (i.e., 0.98 ± 0.01). In some embodiments, the total pore volume is at least 0.4 cm³/grams, at least 0.5 cm³/gram, at least 0.6 cm³/gram, or at least 0.7 cm³/gram. The total pore volume can be up to 2.0 cm³/gram or even higher, up to 1.5 cm³/gram, up to 1.2 cm³/gram, up to 1.0 cm³/gram, or up to 0.8 cm³/gram.

The structure of the divinylbenzene-based polymeric material is particularly well suited to form a porous polymeric sorbent. Providing that the content of monomeric units of Formula (II) is low (e.g., not greater than 25 weight percent or no greater than 20 weight percent), the structure has high crosslinking which contributes to the formation of a porous polymeric material, particularly, a porous polymeric material having a high content of micropores and/or mesopores.

The porous polymeric sorbent sorbs carbon dioxide. Thus, in another aspect, a composition is provided that includes a) the porous polymeric sorbent described above and b) carbon dioxide sorbed on the porous polymeric sorbent. Typically, at least 1 mmoles (millimoles) carbon dioxide is sorbed per gram of porous polymeric sorbent at 25°C and 5 bar.

The amount of carbon dioxide that sorbs on the porous polymeric sorbent tends to increase with pressure. For example, the amount of carbon dioxide sorbed in mmoles per gram (mmoles carbon dioxide sorbed per gram of porous polymeric sorbent) at room temperature (e.g., 25°C) and 20 bar is often at least 3 times greater than the amount sorbed in mmoles per gram at room temperature (e.g., 25°C) and 1 bar. That is, the ratio of the amount sorbed in mmoles per gram at room temperature (e.g., 25°C) and 20 bar to the amount sorbed in mmoles per gram at room temperature (e.g., 25°C) and 1 bar is at least 3. For example, this ratio can be at least 4, at least 5, or at least 6 and can be up to 10 or more, up to 9, up to 8, or up to 7.

Stated differently, the difference in the amount of carbon dioxide sorbed at room temperature (e.g., 25°C) and 20 bar and the amount of carbon dioxide sorbed at room temperature (e.g., 25°C) and 1 bar is often at least 1.75 mmoles per gram, at least 2 mmoles per gram, at least 2.5 mmoles per gram, at least 3 mmoles per gram, at least 4 mmoles per gram, or at least 5 mmoles per gram. The amount can be up to 10 mmoles per gram, up to 8 mmoles per gram, or up to 6 mmoles per gram.

The amount of carbon dioxide sorbed at room temperature (e.g., 25°C) and 1 bar is often at least 0.25 mmoles per gram of porous polymeric sorbent. The amount sorbed can be at least 0.5 mmoles per gram, at least 0.75 mmoles per gram, at least 1.0 mmoles per gram, at least 1.25 mmoles per gram, at least 1.5 mmoles per gram, at least 2.0 mmoles per gram, at least 2.5 mmoles per gram, at least 3 mmoles per gram, at least 4 mmoles per gram, or at least 5 mmoles per gram.

The amount of carbon dioxide sorbed at room temperature (e.g., 25°C) and 1 bar is often at least 1.1 weight percent based on the weight of the porous polymeric sorbent. The amount sorbed can be at least 2.2 weight percent, at least 3.3 weight percent, at least 4.4 weight percent, at least 5.5 weight percent, at least 6.6 weight percent, at least 8.8 weight percent, at least 11.0 weight percent, at least 13.2 weight percent, at least 17.6 weight percent, or at least 22.2 weight percent.

The amount of carbon dioxide sorbed at room temperature (e.g., 25°C) and 5 bar is often at least 1.0 mmoles per gram of porous polymeric sorbent. The amount sorbed can be at least 1.25 mmoles per gram, at least 1.5 mmoles per gram, at least 2 mmoles per gram, at least 3 mmoles per gram, at least 4 mmoles per gram, or at least 5 mmoles per gram.

The amount of carbon dioxide sorbed at room temperature (e.g., 25°C) and 5 bar is often at least 4.4 weight percent based on the weight of the porous polymeric sorbent. The amount sorbed can be at least 5.5 weight percent, at least 6.6 weight percent, at least 8.8 weight percent, at least 13.2 weight percent, at least 17.6 weight percent, or at least 22 weight percent.

The amount of carbon dioxide sorbed at room temperature (e.g., 25°C) and 10 bar is often at least 1.5 mmoles per gram of porous polymeric sorbent. The amount sorbed can be at least 2.0 mmoles per gram, at least 2.5 mmoles per gram, at least 3 mmoles per gram, at least 4 mmoles per gram, at least 5 mmoles per gram, or at least 6 mmoles per gram.

The amount of carbon dioxide sorbed at room temperature (e.g., 25°C) and 10 bar is often at least 6.6 weight percent based on the weight of the porous polymeric sorbent. The amount sorbed can be at least 8.8 weight percent, at least 11 weight percent, at least 13.2 weight percent, at least 17.6 weight percent, at least 22 weight percent, or at least 26.4 weight percent.

The amount of carbon dioxide sorbed at room temperature (e.g., 25°C) and 20 bar is often at least 2 mmoles per gram of porous polymeric sorbent. The amount sorbed can be at least 2.5 mmoles per gram, at least 3 mmoles per gram, at least 4 mmoles per gram, at least 5 mmoles per gram, at least 6 mmoles per gram, or at least 7 mmoles per gram.

The amount of carbon dioxide sorbed at room temperature (e.g., 25°C) and 20 bar is often at least 8.8 weight percent based on the weight of the polymeric sorbent. The amount sorbed can be at least 11 weight percent, at least 13.2 weight percent, at least 17.6 weight percent, at least 22 weight percent, at least 26.4 weight percent, or at least 30.8 weight percent.

The polymeric sorbent selectively sorbs carbon dioxide over methane. For example, the amount of sorbed carbon dioxide at room temperature (e.g., 25°C) and 20 bar is often at least 2 times greater than the amount of sorbed methane at room temperature (e.g., 25°C) and 20 bar. That is, the ratio of the amount of carbon dioxide (in mmoles per gram) to the amount of methane (in mmoles per gram) sorbed at room temperature (e.g., 25°C) and 20 bar is at least 2. For example, this ratio can be at least 2.5, at least 3, at least 3.5, at least 4, at least 4.5, or at least 5 and can be up to 10, up to 8, or up to 6. Selectivity for the sorption of carbon dioxide over hydrogen is expected to be at least as good as the selectivity for the sorption of carbon dioxide over methane.

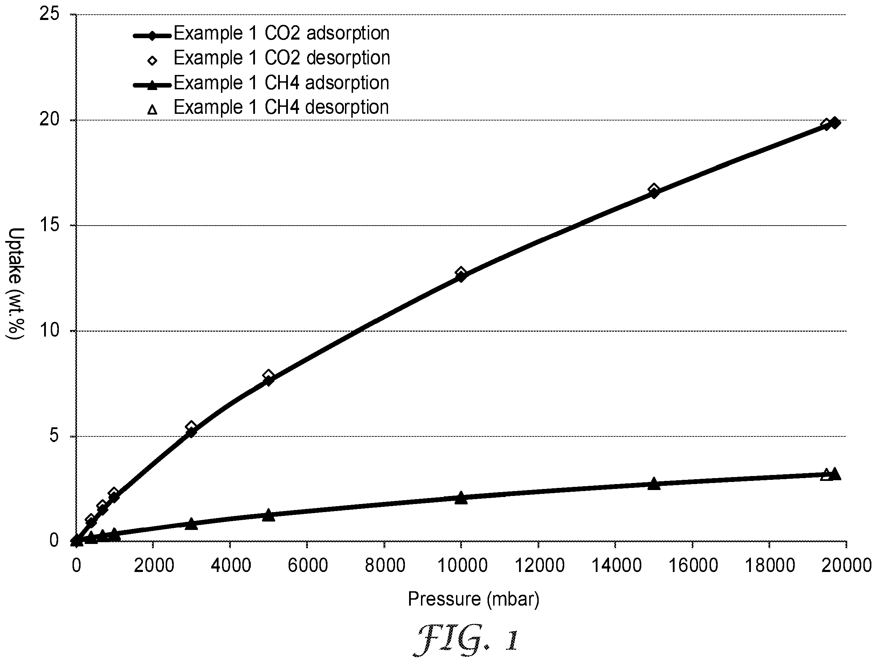

There is only a small amount of hysteresis between the adsorption and desorption curves for carbon dioxide and methane (e.g., see FIG. 1). This may suggest that the pores of the polymeric sorbent can be both filled and emptied easily with either carbon dioxide or methane. The method of sorbing carbon dioxide on the porous polymeric sorbent includes exposing the porous polymeric sorbent at a first pressure to a gaseous composition that contains carbon dioxide and sorbing carbon dioxide on the porous polymeric sorbent. The method still further includes regenerating the polymeric sorbent by desorbing carbon dioxide at a second pressure that is lower than the first pressure but that is greater than or equal to 1 bar. The porous polymeric sorbent can be used repeatedly to sorb and to desorb carbon dioxide by cycling the pressure between a first pressure such as at least 5 bar, at least 10 bar, at least 15 bar, or at least 20 bar and a second pressure lower than the first pressure. The second pressure is often close to 1 bar but can be greater than or less than 1 bar. In many embodiments, the second pressure is equal to 1 bar or in a range of 1 bar to 2 bar or in a range of 0.75 to 2 bar or in a range of 0.75 to 1.5 bar or in a range of 0.75 to 1.25 bar. It is typically considered advantageous for the second pressure to be greater than or equal to 1 bar so that no vacuum is required to desorb the carbon dioxide from the porous polymeric sorbent. For example, the amount of carbon dioxide sorbed at room temperature (e.g., 25°C) and 20 bar can be reduced by at least 60 weight percent, at least 70 weight percent, at least 80 weight percent, or at least 90 weight percent by lowering the pressure to about 1 bar.

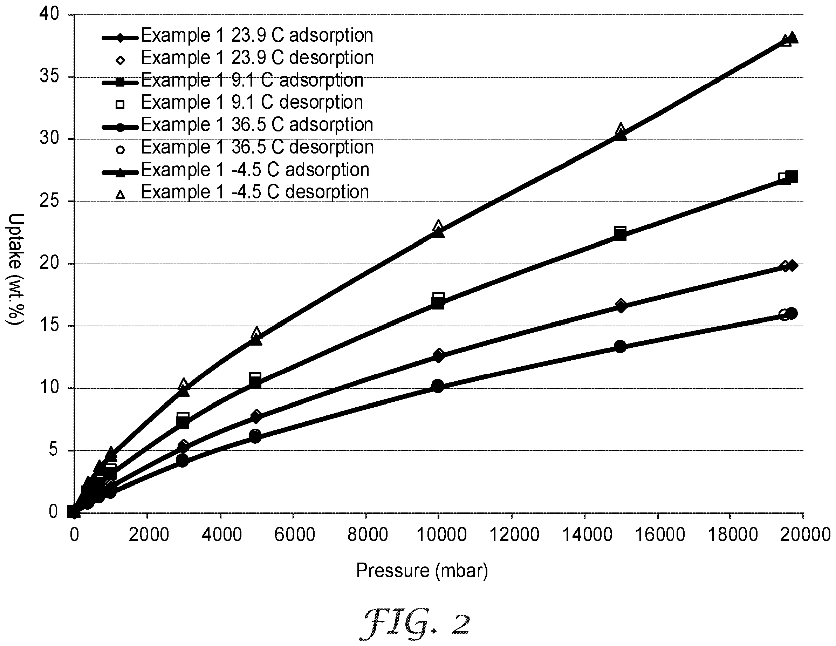

The amount of carbon dioxide sorbed can be varied depending on the temperature and pressure. As the temperature is decreased and/or the pressure is increased, the amount of carbon dioxide sorbed per gram of the porous polymeric sorbent tends to increase (e.g., see FIG. 2).

Some polymeric materials that have been used for sorption of carbon dioxide have functional groups. Compared to these known polymeric materials, the porous polymeric sorbents based on divinylbenzene are more hydrophobic. These more hydrophobic porous polymeric sorbents may be preferable when water vapor is present in the gaseous composition. Water is not likely to be sorbed in significant amounts and is not likely to adversely interfere with the capture efficiency of carbon dioxide on the porous polymeric sorbent. Although not wishing to be bound by theory, the aromatic groups may facilitate solubility of the carbon dioxide within the porous polymeric sorbents. That is, sorption may occur by pore filling, swelling of the porous polymeric sorbent, or both.

The method of preparing the polymeric sorbent advantageously does not require the use of FeCl₃ and/or a halogenated solvent.

### EXAMPLES

**Table 1: List of materials**

| **Chemical Name** | **Chemical Supplier** |
|---|---|
| Divinylbenzene (DVB) (80% tech grade), which contained 80 weight percent DVB and 20 weight percent styrene-type monomers. The calculation of moles of DVB used to prepare the polymeric material does take into account the purity. | Sigma-Aldrich, Milwaukee, WI |
| Benzoyl peroxide (BPO) | Sigma-Aldrich, Milwaukee, WI |
| Ethyl acetate (EtOAc) | EMD Millipore Chemicals, Billerica, MA |

### Argon Adsorption Analysis:

Porosity and gas sorption experiments were performed using a Micromeritics Instrument Corporation (Norcross, GA) accelerated surface area and porosimetry (ASAP) 2020 system using adsorbates of ultra-high purity. The following is a typical method used for the characterization of the porosity within the porous polymeric sorbents. In a Micromeritics half inch diameter sample tube, 50-250 milligrams of material was degassed by heating under ultra-high vacuum (3-7 micrometers Hg) on the analysis port of the ASAP 2020 to remove residual solvent and other adsorbates. The degas procedure was 3 hours at 150°C.

Argon sorption isotherms at 77°K were obtained using low pressure dosing (5 cm³/g) at a relative pressure (p/p°) less than 0.1 and a pressure table of linearly spaced pressure points from a p/p° from 0.1 to 0.98. The method for all isotherms made use of the following equilibrium intervals: 90 seconds at p/p° less than 10⁻⁵, 40 seconds at p/p° in a range of 10⁻⁵ to 0.1, and 20 seconds at p/p° greater than 0.1. Helium was used for the free space determination, after argon sorption analysis, both at ambient temperature and at 77°K. BET specific surface areas (SA_{BET}) were calculated from argon adsorption data by multipoint Brunauer-Emmett-Teller (BET) analysis.

Apparent micropore distributions were calculated from argon adsorption data by density functional theory (DFT) analysis using the argon at 77°K on carbon slit pores by non-linear density functional theory (NLDFT) model. Total pore volume was calculated from the total amount of argon adsorbed at a p/p° equal to approximately 0.98. BET, DFT and total pore volume analyses were performed using Micromeritics MicroActive Version 1.01 software.

### Carbon Dioxide and Methane Adsorption Analysis:

A high pressure microgravimetric gas sorption system model IGA-001 from Hiden Analytical (Warrington, U.K.) was used to measure the CO₂ and CH₄ adsorption/desorption isotherms for each sample at various temperatures. This automated instrument integrates precise computer-control and measurement of weight change, pressure, and temperature during measurements to determine the gas adsorption/desorption isotherms of small quantities of materials. The following is a general procedure for the CO₂ and CH₄ adsorption/desorption isotherm measurement of the porous polymeric sorbents exemplified.

Prior to measurements, approximately 100 mg of a porous polymeric sorbent was loaded onto the quartz crucible provided with the instrument. The crucible was then attached to the internal suspension rods of the microbalance. The sample was degassed at 150°C for 8 hours under high vacuum (<1 mmHg). After degassing, the weight of the sample was recorded and set as the initial reference weight for adsorption. Ultrahigh purity gases (CO₂ or CH₄) were introduced in predetermined pressure steps, starting from vacuum and going up to 20 bar. During measurements, the sample temperature was kept constant (± 0.2°C of target temperature) by using a circulating bath. After each variation of pressure, the weight relaxation was monitored in real time by the instrument's software, and the asymptotic equilibrium weight was calculated. After equilibration at each pressure level, a new pressure change was caused and the system moved to the next isotherm point. A normal cycle consisted of an adsorption branch (vacuum to 20 bar) and a reversed desorption branch (20 bar down to vacuum). Buoyancy corrections were made by using the skeletal density of each porous polymeric sorbent obtained from helium pycnometer measurements. The precision of gravimetric measurements is estimated to be ± 0.01 wt. % for a 100 mg sample at a pressure of 20 bar.

### Example 1:

In a 5 L round bottom flask, 125.0 grams (768 mmoles) divinylbenzene (DVB) (80%, tech grade) and 2.50 grams (10.3 mmoles) of benzoyl peroxide (BPO) were dissolved in 2.65 L of ethyl acetate (EtOAc). The polymerizable composition had 5.0 wt. % solids in EtOAc and contained a monomer mixture (80.0 wt. % DVB and 20.0 wt. % styrene-type monomers) and 2 wt. % BPO (based on the total weight of monomers). The polymerizable composition was bubbled with nitrogen for 30 minutes. The flask was then capped and placed in a sand bath at 95°C. The polymerizable composition was heated at this elevated temperature for 17 hours. A white precipitate that had formed was isolated by vacuum filtration and washed with EtOAc. The solid was divided up and placed in two 32 ounce jars. The jars were then each filled with 700 mL of EtOAc. The solids were allowed to stand in EtOAc for one hour at room temperature. The solids were again isolated by vacuum filtration and washed with EtOAc. The solid was divided up again and placed in two 32 ounce jars. The jars were then each filled with 700 mL of EtOAc. The solids were allowed to stand in EtOAc for 18 hours. The solids were again isolated by vacuum filtration and washed with EtOAc. The solid was then dried under high vacuum at 95°C for 18 hours.

FIG. 1 contains plots of adsorption and desorption isotherms for both carbon dioxide and methane on this porous polymeric sorbent at various pressures up to 20 bar at 23.8°C. This porous polymeric sorbent adsorbed 4.52 mmoles per gram (19.9 wt. % uptake) CO₂ at 20 bar at 23.8°C and 0.48 mmoles per gram (2.1 wt. % uptake) CO₂ at 1 bar at 23.8°C. This porous polymeric sorbent adsorbed 1.75 mmoles per gram (2.8 wt. % uptake) CH₄ at 20 bar at 23.8°C and 0.18 mmoles per gram (0.29 wt. % uptake) CH₄ at 1 bar at 23.8°C.

To demonstrate the utility of this porous polymeric sorbent for applications involving the pressure swing adsorption of CO₂, a single sample of the porous polymeric sorbent was run through repeated adsorption/desorption cycles at various temperatures. Specifically, the adsorption/desorption isotherms of a single sample of the porous polymeric sorbent of Example 1 were measured, in order, at 23.9, 9.1, 23.9, 36.5, 23.8, -4.5 and 23.8°C. FIG. 2 contains plots of carbon dioxide adsorption and desorption isotherms at pressures up to about 20 bar performed at these different temperatures. A single adsorption and desorption isotherms at 23.9°C is shown in FIG. 2 because all four of the adsorption and desorption isotherms at this temperature were indistinguishable. Table 2 lists the individual data points for pressure and percent mass uptake of carbon dioxide from all seven adsorption/desorption cycles performed on the single sample of the porous polymeric sorbent of Example 1 in the order in which the cycles were performed. FIG. 2 corresponds to the data in Table 2 but shows only a single adsorption/desorption cycle at 23.9°C.

FIG. 3 is a plot of the argon adsorption isotherm at 77°K and at a relative pressure up to 0.98 + 0.01 for Example 1. This porous polymeric sorbent had a SA_{BET} of 1121.9 m²/gram and a total pore volume of 1.113 cm³/gram (p/p° equal to 0.976) as determined by argon adsorption.

**Table 2: Adsorption / Desorption Isotherms at Various Temperatures**

| 1st Adsorption/Desorption (23.9°C) | | 2nd Adsorption/Desorption (9.1°C) | | 3rd Adsorption/Desorption (23.9°C) | | 4th Adsorption/Desorption (36.5°C) | | 5th Adsorption/Desorption (23.9°C) | | 6th Adsorption/Desorption (-4.5°C) | | 7th Adsorption/Desorption (23.9°C) | |
|---|---|---|---|---|---|---|---|---|---|---|---|---|---|
| P (mbar) | %Mass | P (mbar) | %Mass | P (mbar) | %Mass | P (mbar) | %Mass | P (mbar) | %Mass | P (mbar) | %Mass | P (mbar) | %Mass |
| 3 | 0.000 | 3 | 0.024 | 3 | 0.031 | 3 | 0.026 | 4 | 0.037 | 4 | 0.085 | 4 | 0.081 |
| 15 | 0.055 | 14 | 0.105 | 14 | 0.090 | 15 | 0.069 | 15 | 0.099 | 15 | 0.226 | 15 | 0.142 |
| 400 | 0.893 | 398 | 1.474 | 399 | 1.045 | 399 | 0.730 | 399 | 1.040 | 399 | 2.294 | 399 | 1.093 |
| 698 | 1.525 | 698 | 2.319 | 698 | 1.678 | 698 | 1.194 | 698 | 1.666 | 698 | 3.499 | 698 | 1.727 |
| 999 | 2.105 | 1000 | 3.098 | 999 | 2.256 | 1000 | 1.624 | 1000 | 2.239 | 999 | 4.553 | 999 | 2.306 |
| 2998 | 5.188 | 2997 | 7.163 | 2997 | 5.317 | 2998 | 4.064 | 2997 | 5.272 | 2999 | 9.814 | 2998 | 5.380 |
| 4998 | 7.635 | 4998 | 10.364 | 4997 | 7.763 | 4997 | 6.017 | 4998 | 7.712 | 4998 | 13.984 | 4998 | 7.828 |
| 9999 | 12.552 | 9998 | 16.792 | 9998 | 12.682 | 9997 | 10.037 | 9996 | 12.597 | 9997 | 22.571 | 9997 | 12.715 |
| 14996 | 16.531 | 14998 | 22.225 | 15000 | 16.669 | 15001 | 13.295 | 14999 | 16.639 | 15000 | 30.376 | 14998 | 16.735 |
| 19700 | 19.876 | 19698 | 26.940 | 19700 | 19.966 | 19699 | 15.934 | 19701 | 19.922 | 19697 | 38.217 | 19700 | 20.072 |
| 19700 | 19.876 | 19698 | 26.940 | 19700 | 19.966 | 19699 | 15.934 | 19701 | 19.922 | 19697 | 38.217 | 19700 | 20.072 |
| 19501 | 19.802 | 19501 | 26.800 | 19501 | 19.890 | 19500 | 15.851 | 19495 | 19.842 | 19495 | 37.968 | 19500 | 19.985 |
| 14992 | 16.734 | 14999 | 22.482 | 14999 | 16.824 | 14993 | 13.359 | 14996 | 16.793 | 15000 | 30.869 | 14995 | 16.911 |
| 10001 | 12.764 | 10001 | 17.129 | 10000 | 12.838 | 9998 | 10.163 | 10000 | 12.809 | 9999 | 23.106 | 9999 | 12.932 |
| 5000 | 7.895 | 4999 | 10.728 | 5001 | 7.950 | 4999 | 6.168 | 5000 | 7.933 | 5000 | 14.551 | 5000 | 8.022 |
| 3000 | 5.441 | 3000 | 7.533 | 3000 | 5.492 | 2999 | 4.201 | 2999 | 5.494 | 3000 | 10.337 | 3001 | 5.554 |
| 1001 | 2.313 | 1001 | 3.385 | 999 | 2.356 | 999 | 1.727 | 1001 | 2.360 | 1001 | 4.882 | 1001 | 2.413 |
| 700 | 1.718 | 700 | 2.553 | 699 | 1.758 | 700 | 1.274 | 699 | 1.762 | 699 | 3.753 | 698 | 1.810 |
| 400 | 1.071 | 399 | 1.630 | 399 | 1.107 | 399 | 0.795 | 399 | 1.119 | 399 | 2.483 | 399 | 1.161 |
| 8 | 0.062 | 8 | 0.115 | 8 | 0.098 | 6 | 0.075 | 8 | 0.107 | 6 | 0.218 | 9 | 0.147 |

## Claims

1. A method of sorbing carbon dioxide from a gaseous composition to selectively remove carbon dioxide from methane or hydrogen gas, the method comprising;
providing a porous polymeric sorbent, wherein the porous polymeric sorbent has a BET specific surface area of at least 400 m²/gram, the porous polymeric sorbent comprising
a) 75 to 100 weight percent of a first monomeric unit of Formula (I); and 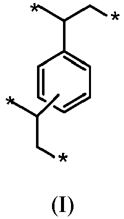
b) 0 to 25 weight percent of a second monomeric unit of Formula (II); 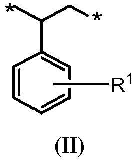 wherein
R¹ is hydrogen or alkyl;
each weight percent is based on a total weight of the porous polymeric sorbent; and
exposing the porous polymeric sorbent to the gaseous composition at a first pressure, wherein the gaseous composition comprises carbon dioxide;
sorbing carbon dioxide from the gaseous composition on the porous polymeric sorbent; and desorbing carbon dioxide from the porous polymeric sorbent at a second pressure that is lower than the first pressure.

2. The method of claim 1, wherein the porous polymeric sorbent comprises 75 to 95 weight percent of the first monomeric units of Formula (I) and 0 to 20 weight percent of the second monomeric units of Formula (II).

3. The method of claim 1 or 2, wherein the BET specific surface area is at least 600 m²/gram.

4. The method of any one of claims 1 to 3, wherein the porous polymeric sorbent sorbs at least 1.0 mmoles carbon dioxide per gram at 25°C and a first pressure of 5 bar.

5. The method of any one of claims 1 to 4, wherein the porous polymeric sorbent sorbs at least 1.5 mmoles carbon dioxide per gram at 25°C and a first pressure of 10 bar.

6. The method of any one of claims 1 to 5, wherein the porous polymeric sorbent sorbs at least 2.0 mmoles carbon dioxide per gram at 25°C and a first pressure of 20 bar.

7. The method of any one of claims 1 to 6, wherein an amount of carbon dioxide sorbed on the porous polymeric sorbent in mmoles per gram is at least 3 times greater at 25°C and 20 bar than at 25°C and 1 bar.

8. The method of any one of claims 1 to 7, wherein the gaseous composition comprises carbon dioxide and hydrogen.

9. The method of any one of claims 1 to 8, wherein the gaseous composition comprises carbon dioxide and methane and wherein an amount of carbon dioxide sorbed on the porous polymeric sorbent in mmoles per gram at 25°C and 20 bar is at least 2 times greater than an amount of methane sorbed on the porous polymeric sorbent in mmoles per gram at 25°C and 20 bar.

10. The method of any one of claims 1 to 9, wherein the second pressure is greater than or equal to 1 bar.

11. The method of any one of claims 1 to 10, wherein the method further comprises one or more additional exposing steps and one or more additional regenerating steps.

12. The method of claim 1, wherein the first pressure is at least 5 bar.

## Patentansprüche

1. Ein Verfahren zum Sorbieren von Kohlendioxid aus einer gasförmigen Zusammensetzung, um selektiv Kohlendioxid aus Methan- oder Wasserstoffgas zu entfernen, wobei das Verfahren umfasst:
Bereitstellen eines porösen polymeren Sorptionsmittels, wobei das poröse polymere Sorptionsmittel eine spezifische BET-Oberfläche von mindestens 400 m²/Gramm aufweist, wobei das poröse polymere Sorptionsmittel umfasst
a) zu 75 bis 100 Gewichtsprozent eine erste Monomereinheit der Formel (I); und 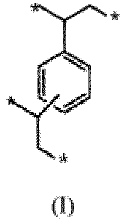
b) zu 0 bis 25 Gewichtsprozent eine zweite Monomereinheit der Formel (II); 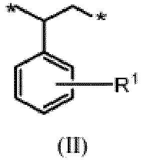 wobei
R¹ Wasserstoff oder Alkyl ist;
wobei jeder Gewichtsprozentsatz auf einem Gesamtgewicht des porösen polymeren Sorptionsmittels beruht; und
Einwirkenlassen der gasförmigen Zusammensetzung auf das poröse polymere Sorptionsmittel bei einem ersten Druck, wobei die gasförmige Zusammensetzung Kohlendioxid umfasst;
Sorbieren von Kohlendioxid aus der gasförmigen Zusammensetzung auf dem porösen polymeren Sorptionsmittel; und
Desorbieren von Kohlendioxid aus dem porösen polymeren Sorptionsmittel bei einem zweiten Druck, der niedriger als der erste Druck ist.

2. Das Verfahren nach Anspruch 1, wobei das poröse polymere Sorptionsmittel zu 75 bis 95 Gewichtsprozent die ersten Monomereinheiten der Formel (I) und zu 0 bis 20 Gewichtsprozent die zweiten Monomereinheiten der Formel (II) umfasst.

3. Das Verfahren nach Anspruch 1 oder 2, wobei die spezifische BET-Oberfläche mindestens 600 m²/Gramm beträgt.

4. Das Verfahren nach einem der Ansprüche 1 bis 3, wobei das poröse polymere Sorptionsmittel bei 25 °C und einem ersten Druck von 5 bar mindestens 1,0 mmol Kohlendioxid pro Gramm sorbiert.

5. Das Verfahren nach einem der Ansprüche 1 bis 4, wobei das poröse polymere Sorptionsmittel bei 25 °C und einem ersten Druck von 10 bar mindestens 1,5 mmol Kohlendioxid pro Gramm sorbiert.

6. Das Verfahren nach einem der Ansprüche 1 bis 5, wobei das poröse polymere Sorptionsmittel bei 25 °C und einem ersten Druck von 20 bar mindestens 2,0 mmol Kohlendioxid pro Gramm sorbiert.

7. Das Verfahren nach einem der Ansprüche 1 bis 6, wobei eine Menge an Kohlendioxid, die auf dem porösen polymeren Sorptionsmittel in mmol pro Gramm sorbiert wird, bei 25 °C und 20 bar mindestens 3-mal so groß ist wie bei 25 °C und 1 bar.

8. Das Verfahren nach einem der Ansprüche 1 bis 7, wobei die gasförmige Zusammensetzung Kohlendioxid und Wasserstoff umfasst.

9. Das Verfahren nach einem der Ansprüche 1 bis 8, wobei die gasförmige Zusammensetzung Kohlendioxid und Methan umfasst und wobei eine Menge an Kohlendioxid, die auf dem porösen polymeren Sorptionsmittel in mmol pro Gramm bei 25 °C und 20 bar sorbiert wird, mindestens 2-mal so groß ist wie eine Menge von Methan, die auf dem porösen polymeren Sorptionsmittel in mmol pro Gramm bei 25 °C und 20 bar sorbiert wird.

10. Das Verfahren nach einem der Ansprüche 1 bis 9, wobei der zweite Druck mehr als oder gleich 1 bar beträgt.

11. Das Verfahren nach einem der Ansprüche 1 bis 10, wobei das Verfahren ferner einen oder mehrere zusätzliche Einwirkschritte und einen oder mehrere zusätzliche Regenerationsschritte umfasst.

12. Das Verfahren nach Anspruch 1, wobei der erste Druck mindestens 5 bar beträgt.

## Revendications

1. Procédé de sorption de dioxyde de carbone d'une composition gazeuse pour éliminer sélectivement du dioxyde de carbone de méthane ou d'hydrogène gazeux, le procédé comprenant ;
la fourniture d'un sorbant polymère poreux, dans lequel le sorbant polymère poreux a une surface spécifique BET d'au moins 400 m²/gramme, le sorbant polymère poreux comprenant
a) 75 à 100 pour cent en poids d'un premier motif monomère de Formule (I) ; et 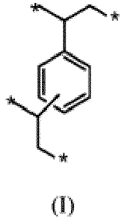
b) 0 à 25 pour cent en poids d'un deuxième motif monomère de Formule (II) ; 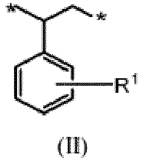
dans lequel
R¹ est hydrogène ou alkyle ;
chaque pour cent en poids est basé sur un poids total du sorbant polymère poreux ; et
l'exposition du sorbant polymère poreux à la composition gazeuse à une première pression, dans lequel la composition gazeuse comprend du dioxyde de carbone ;
la sorption du dioxyde de carbone de la composition gazeuse sur le sorbant polymère poreux ; et
la désorption du dioxyde de carbone du sorbant polymère poreux à une deuxième pression qui est inférieure à la première pression.

2. Procédé selon la revendication 1, dans lequel le sorbant polymère poreux comprend 75 à 95 pour cent en poids des premiers motifs monomères de Formule (I) et 0 à 20 pour cent en poids des deuxièmes motifs monomères de Formule (II).

3. Procédé selon la revendication 1 ou 2, dans lequel la surface spécifique BET est d'au moins 600 m²/gramme.

4. Procédé selon l'une quelconque des revendications 1 à 3, dans lequel le sorbant polymère poreux réalise une sorption d'au moins 1,0 mmole de dioxyde de carbone par gramme à 25 °C et à une première pression de 5 bar.

5. Procédé selon l'une quelconque des revendications 1 à 4, dans lequel le sorbant polymère poreux réalise une sorption d'au moins 1,5 mmole de dioxyde de carbone par gramme à 25 °C et à une première pression de 10 bar.

6. Procédé selon l'une quelconque des revendications 1 à 5, dans lequel le sorbant polymère poreux réalise une sorption d'au moins 2,0 mmoles de dioxyde de carbone par gramme à 25 °C et à une première pression de 20 bar.

7. Procédé selon l'une quelconque des revendications 1 à 6, dans lequel une quantité de dioxyde de carbone sorbée sur le sorbant polymère poreux en mmoles par gramme est au moins 3 fois plus grande à 25 °C et 20 bar qu'à 25 °C et 1 bar.

8. Procédé selon l'une quelconque des revendications 1 à 7, dans lequel la composition gazeuse comprend du dioxyde de carbone et de l'hydrogène.

9. Procédé selon l'une quelconque des revendications 1 à 8, dans lequel la composition gazeuse comprend du dioxyde de carbone et du méthane et dans lequel une quantité de dioxyde de carbone sorbée sur le sorbant polymère poreux en mmoles par gramme à 25 °C et 20 bar est au moins 2 fois plus grande qu'une quantité de méthane sorbée sur le sorbant polymère poreux en mmoles par gramme à 25 °C et 20 bar.

10. Procédé selon l'une quelconque des revendications 1 à 9, dans lequel la deuxième pression est supérieure ou égale à 1 bar.

11. Procédé selon l'une quelconque des revendications 1 à 10, dans lequel le procédé comprend en outre une ou plusieurs étapes d'exposition supplémentaires et une ou plusieurs étapes de régénération supplémentaires.

12. Procédé selon la revendication 1, dans lequel la première pression est d'au moins 5 bar.
